# EUROPEAN PATENT SPECIFICATION

(11) **EP 1 664 506 B1**
(45) Date of publication and mention of the grant of the patent: **27.12.2006**
(21) Application number: 04816851.2
(22) Date of filing: 09.09.2004
(51) Int. Cl.: F02C 7/277, F01D 9/04

(54) **AIR TURBINE STARTER WITH UNITARY INLET AND STATOR**
LUFTTURBINENSTARTER MIT EINSTÜCKIGEM EINLASS UND STATOR
LANCEUR DE TURBINE A AIR AVEC ADMISSION UNITAIRE ET STATOR

(30) Priority: 12.09.2003 US 661311
(43) Date of publication of application: 07.06.2006
(73) Proprietor: Honeywell International Inc., Morristown, New Jersey 07960 (US)
(72) Inventor: KRUEGEL, Roy, F., Laveen, AZ 85339 (US); COLLINS, Marvin, K., Chandler, AZ 85224 (US); LANGSTON, Todd, A., Chandler, AZ 85205 (US); ARMSTRONG, Gary, E., Mesa, AZ 85205 (US); BYERS, Cynthia, S., Mesa, AZ 85215 (US)
(74) Representative: Haley, Stephen
(86) International application number: PCT/US2004/029412
(87) International publication number: WO 2005/042948

(56) References cited:
- EP-A- 1 382 817
- GB-A- 670 309
- US-A- 2 651 493
- US-A- 2 775 894
- US-A- 4 631 092
- US-A1- 2003 161 721
- PATENT ABSTRACTS OF JAPAN vol. 1999, no. 12, 29 October 1999 (1999-10-29) -& JP 11 200808 A (MITSUBISHI HEAVY IND LTD), 27 July 1999 (1999-07-27)

## Description

### FIELD OF THE INVENTION

This invention relates generally to air turbine starters for gas turbine engines, and, in particular, to the air turbine stator inlet assembly used in such starters.

### BACKGROUND OF THE INVENTION

An air turbine starter is a device used to start a turbine engine, such as a gas turbine jet engine commonly found on aircraft. The air turbine starter is connected to the jet engine and is used to start the jet engine in generally the same way as a starter for an automobile is used to start the automobile's engine. The developer of the present inventions, Honeywell International, Inc., has for years successfully designed, developed, manufactured and repaired air turbine starters.

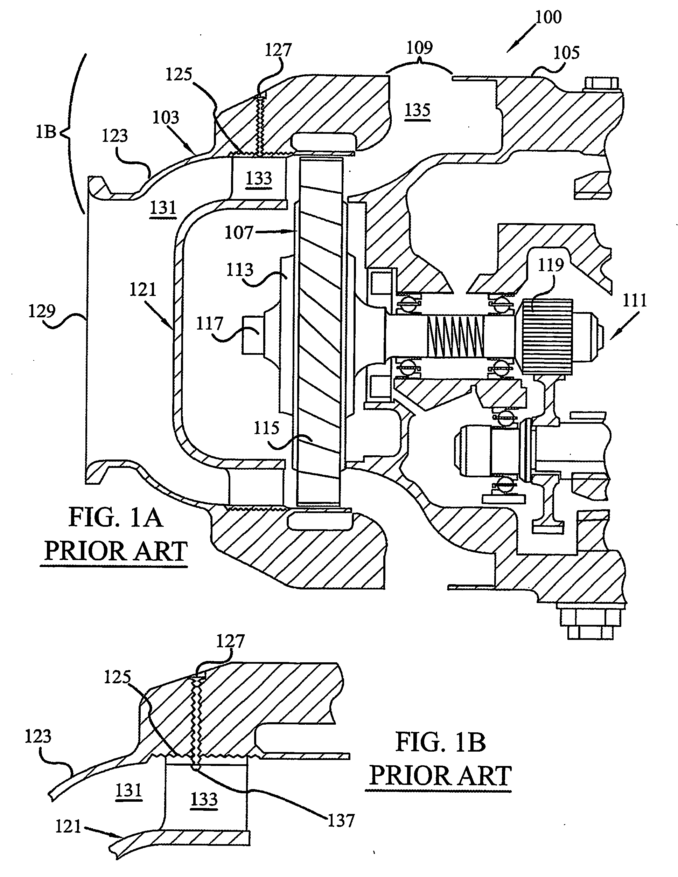

FIG. 1 shows a partial cut-away diagram of a conventional air turbine starter **100**, which includes an air inlet assembly **103** that is joined to a main housing **105**. Maintained within the main housing **105** are airways and other components such as a turbine assembly **107**, an air outlet **109**, and a gearbox **111** which is coupled to an output shaft (not shown). The turbine assembly **107** has a turbine wheel **113** with circumferentially mounted blades **115**, a rotatable drive shaft **117** and a gear **119**. The air inlet assembly **103** is made up of two primary components, a stator **121** and an outer shell **123**. In many instances the stator **121** and outer shell **123** provide mating threads **125**. In some cases a locking pin **127** may additionally be used to assist in keeping the stator **121** and outer shell **123** together. Additional turbine starter features are disclosed in Honeywell's U.S. Patents No. 6,318,958 (Giesler et al.) and 4,914,906 (Burch).

In order to start a jet engine the air turbine starter **100** is first activated. Generally speaking, such activation is accomplished by connecting an air pressure duct to an air inlet **129** provided by the stator **121** portion of the inlet assembly **103**. Compressed air is directed by contoured passage **131** through stator fins **133**, across the turbine blades **115** and is vented from air outlets **109**. In operation, the energy of the.moving air is converted by the blades **115** into rotary motion, causing the turbine assembly **107** to rotate.

Generally, the turbine starter **100** is joined to the jet turbine engine such that it travels with the jet. As a result, the weight of the turbine starter **100** is generally a calculated component of the overall weight of the aircraft and as such, reduces the total amount of cargo weight that the jet may transport. In the commercial aircraft industry, each additional pound of weight may cost the aircraft manufacturer a financial penalty. Likewise each additional savings of a pound may be credited to the manufacturer as a financial savings.

As noted above, the inlet assembly **103** is comprised of two components, namely the stator **121** and outer shell **123**. The function of the stator fins **133** is to direct the supplied compressed air across the turbine blades. The narrowing passageways between the stator fins **133** act as nozzles to increase the velocity of the air as it strikes the rotating turbine blades **115**. Given the velocity and pressure of the compressed air, it is generally desirable to align the direction of the air flow to the turbine blades **115** so as to reduce stress and wear upon the turbine assembly. The outer shell **123** generally aligns the stator fins **133** to the turbine blades **115** and provides the outer portion of the contoured passage **135** leading to the air outlets **109**.

The manufacture of the air inlet assembly **103** is typically an involved tooling process given the nature of the air inlet **129**, the contoured passage **131**, and configuration of the stator fins **133**. As the name suggests, the stator **121** and the stator fins **133** do not rotate. Typically the outer shell **123** may be fabricated as a single piece from a titanium alloy, desired for it's strength and relative light weight as well as other characteristics.

Manufacture of the stator **121** as a single item from a titanium alloy has heretofore not been achievable. The contours, airfoil shapes and limited spaces have frustrated attempts to produce simply the stator **121**, let alone the outer shell **123** and stator **121** as a single contiguous item. As a result, the stator **121** is generally manufactured from a heavier, but easier to tool alloy such as an inconel alloy. Several machining steps may be needed to join the stator **121** to the outer shell **123**, each step potentially resulting in additional training, equipment, cost, and time, as well as potentially different geographic locations of each step of fabrication - a factor adding yet further cost for time and shipping. In addition, the outer shell **123** may be flared out or fabricated with additional sidewall thickness in the area accommodating the mating threads **121**. As such, the inlet assembly **103** weight as thickened may be greater than what could be achieved with a unitary inlet assembly. Further, as the outer shell **123** and stator **121** are fabricated from different metal alloys, the different relative hardness and thermal expansion and contraction properties may frustrate the threaded union and accelerate wear between the components.

Wear of the stator fins **133** and turbine blades **115** is understood to be a natural result of starter operation. In certain instances, internal vibration and or dynamic responses of the turbine blades may result in fracturing of the turbine blades **115**, also known as mouse bites. The occurrence of occasional mouse bites to the turbine blades **115** may decrease operational performance, cause internal damage, and/or accelerate the need for maintenance. The common practice of setting the joined stator **121** and outer shell **123** with a locking pin **127** has been found to occasionally fail. Operational vibration of the aircraft, thermal expansion and contraction, and or perhaps even installation error may introduce the end **137** of the locking pin **127** into the contoured passage **131**, an event that may or may not affect the performance of the starter. Should the locking pin **127** come loose during operation and entirely enter the passage **131**, passage of the pin **127** through the stator fins **133** and or the turbine blades **115** may cause significant damage to these components and affect the overall function and performance of the turbine starter and may necessitate a more extensive rebuild of the turbine starter **100**.

However, it should be appreciated that despite the drawback of mouse bites and the potential failure of the locking pin **127**, air turbine starters are generally operationally safe and reliable. Inspections of the air inlet **129** and stator **121** are generally part of the routine maintenance schedules set for the turbine starter **100**.

Hence, there is a need in for an improved air turbine starter having an inlet and stator with improved characteristics to overcome one or more of the drawbacks identified above. The present invention satisfies one or more of these needs.

### SUMMARY OF THE INVENTION

The invention provides an air turbine starter with an improved unitary inlet structure for gas turbine applications, and an associated improved unitary inlet structure.

In particular, and by way of example only, one embodiment of the present invention provides an air turbine starter having a main housing, a turbine assembly partially disposed within the main housing and a unitary inlet structure. The turbine assembly includes a turbine wheel having a plurality of circumferentially mounted blades. The unitary inlet structure is coupled to the main housing and substantially encloses at least a portion of the turbine wheel. The unitary inlet structure is characterized by a housing section having at least an inlet, an inner surface, and a mounting surface. A stator section is disposed at least partially within the housing section and has an outer surface. At least a portion of the housing section inner surface and at least a portion of the stator section outer surface form a flow path that fluidly couples the housing section air inlet to the turbine blades.

Moreover, according to an embodiment thereof, the invention provides an air turbine starter unitary inlet structure. The unitary inlet structure is characterized by an annular housing having a longitudinal centerline. The housing defines an air inlet, an inner surface and a mounting surface. An annular air director is provided integrally formed as part of the annular housing, the annular air director disposed at least partially within the annular housing and having an outer surface. At least a portion of the annular housing inner surface and the air director outer surface form a flow path that extends substantially parallel to the longitudinal centerline.

In yet another embodiment, the invention may provide a titanium air turbine starter unitary inlet structure. The titanium unitary inlet structure is characterized by a housing having a longitudinal centerline, an air inlet, an inner surface, a mounting surface, the annular housing defining a flow path between the air inlet and the mounting surface. A stator is integrally formed as part of the housing. The stator is disposed at least partially within the housing between the inlet and mounting surface and substantially transverse to the longitudinal centerline.

In optional details, the stator may be further characterized by a central circular body with a plurality of angularly spaced circumferentially mounted stator fins. The stator fins may be also be asymmetrically spaced.

In still another embodiment, the invention provides a method of manufacturing a titanium air turbine starter unitary inlet structure. The method includes casting a unitary inlet structure from an alloy. The cast unitary inlet structure is initially characterized by an oversized annular housing having a longitudinal centerline, at least an air inlet and a mounting surface. An oversized stator integrally formed as part of the oversized annular housing. The oversized stator is disposed at least partially within the housing and has a plurality of angularly spaced, circumferentially mounted oversized stator fins connecting the stator to the annular housing. The oversized housing and stator are chemically milled to remove alloy from the oversized surfaces. The clearance between the chemically milled stator fins is measured and compared to one or more predetermined values. The chemical milling and measuring steps are repeated until at least the measured clearance between the chemically milled stator fins is substantially equal to one or more predetermined values.

These and other features and advantages of the preferred apparatus and method will become apparent from the following detailed description taken in conjunction with the accompanying drawings which illustrate, by way of example the principles of the invention.

### BRIEF DESCRIPTION OF THE DRAWINGS

FIG. 1A is a partial cross-sectional view of a prior art turbine starter with a two-piece stator inlet assembly;

FIG. 1B is an enlarged cross-sectional view of the threaded attachment of the prior art assembly shown in FIG. 1A;

FIG. 2 is a partial cross-sectional view of a an air turbine starter with a the unitary inlet structure according to an embodiment of the present invention;

FIG. 3A is a half cutaway of the unitary inlet structure shown in FIG. 2;

FIG. 3B is a partial cutaway of the unitary inlet structure shown in FIG. 2;

FIG. 4 is a perspective view of the unitary inlet structure shown in FIGS. 3A and 3B;

FIG. 5 is an exterior view of the unitary inlet structure shown in FIG. 4;

FIG. 6 is an interior view of the unitary inlet structure shown in FIG. 5;

FIGS. 7A through 7C illustrate the steps of making the unitary inlet structure as shown in FIGS. 3A and 3B.

### DETAILED DESCRIPTION

Before proceeding with the detailed description, it is to be appreciated that the present invention is not limited to use or application with a specific type of air turbine starter. Thus, although the present invention is, for the convenience of explanation, depicted and described with respect to one type of unitary air turbine stator inlet as may be used in connection with a gas turbine engine, this invention may be applied to other types and styles of air turbine starters used in other turbine engine applications.

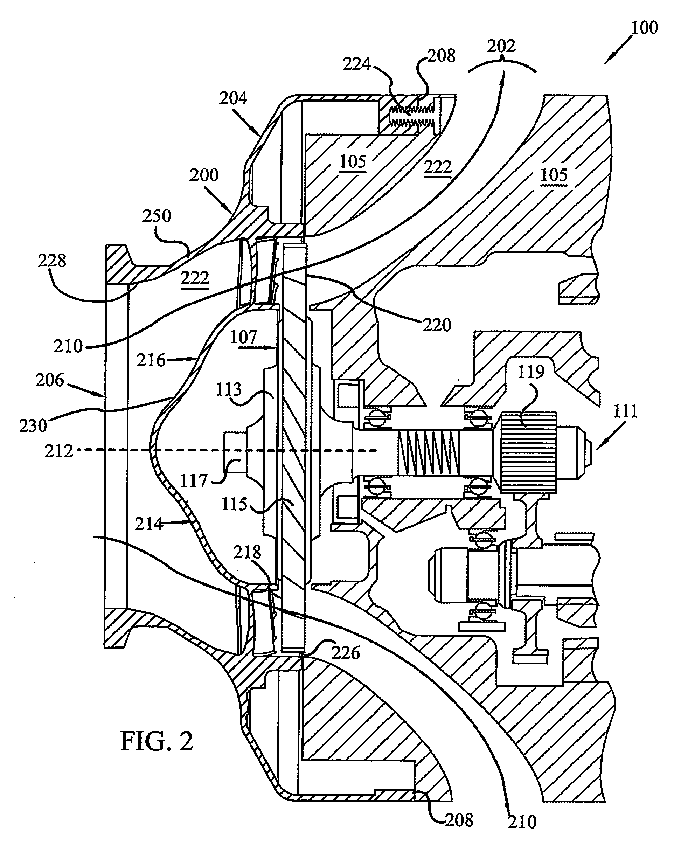

A partial cut-away view of an exemplary air turbine starter **100** employing an embodiment of the present invention is shown in FIG. 2. As shown herein, air turbine starter **100** includes a main housing **105**, a gearbox **111** a turbine assembly **107**, a unitary inlet structure **200**, and at least one air outlet vent **202**. The gearbox **111** is coupled to an output shaft (not shown), which is in turn coupled to, for example, a turbofan jet engine. The turbine assembly **107** includes a turbine wheel **113** with circumferentially mounted blades **115** and a rotatable drive shaft **117** that extends into the main housing **105** and is joined to gear **119** and gearbox **111**.

The unitary inlet and stator, more simply identified as the unitary inlet structure **200** includes a housing section **204** with an interior surface **228** defining an air inlet **206**, a mounting surface **208**, and a flow path (represented by arrows **210**) for conveying a flow of air therebetween. In at least one embodiment the housing **204** is an annular housing about a longitudinal centerline **212**. The longitudinal centerline **212** may substantially match to the longitudinal centerline of the drive shaft **117**. An annular air director **214**, such as a stator **216** is integrally formed as part of housing **204** proximate to the inlet **206**. More specifically the air director **214** is disposed at least partially within the housing **204**, substantially transverse to the flow path **210** and concentric to the longitudinal centerline **212**. The stator **216** has an outer surface **230** that, along with the inner surface **228** of the housing **204**, further forms and defines flow path **210**. More specifically, at least a portion of the inner surface **288** of the housing **204** and a portion of the outer surface **230** of the stator **216** fluidly couple the air inlet **206** to the turbine blades **115**.

The mounting surface **208** is shaped and sized to join the unitary inlet structure **200** to the main housing **105**, such that the stator **216** is positioned proximate to the upstream side **218** of turbine wheel **113.** In addition, the turbine wheel **113** is substantially enclosed by the unitary inlet structure **200**. The outlets **202** are located proximate to the downstream side **220** of the turbine wheel. Under appropriate circumstances, outlets **202** may be provided as part of the unitary inlet structure **200** housing **204** rather than the main housing **150** of the starter **100**. As conceptually illustrated, the unitary inlet structure **200** and main housing **105** define a flow path through passage **222**. Compressed air entering the inlet **206** is channeled by passage **222** through the stator **216**, through the blades **115** of the turbine wheel **113**, and to the outlet **202**.

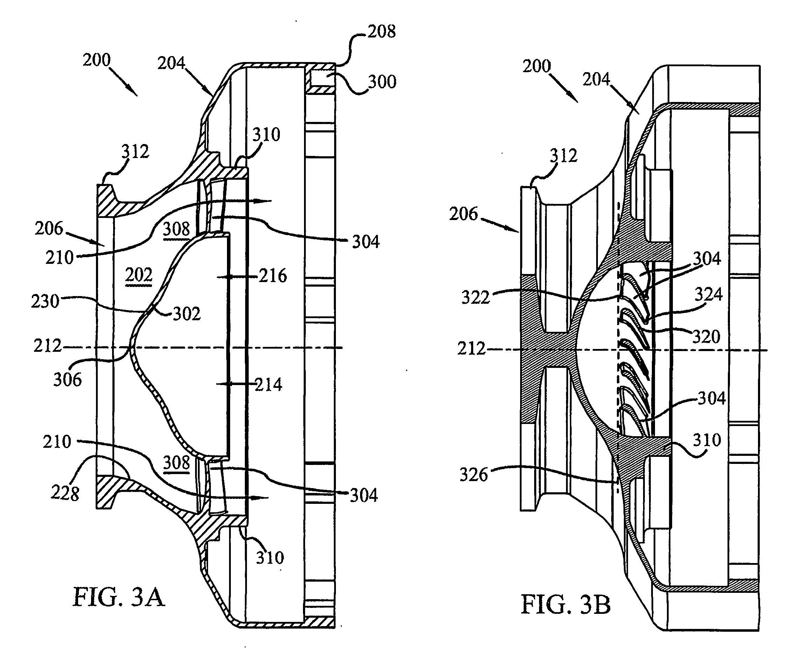

The joining of the unitary inlet structure **200** to the main housing **105** may be accomplished by the any one of numerous forms of attachers such as, for example a threaded screw sockets **300** (see FIG. 3), set to receive bolts **224** extending from the main housing **105**. Under appropriate circumstances, other suitable alternative joining methods may be employed. Generally, attaching bolts **224** and outlet vents **202** alternate in their placement about the exterior of the main housing **105**. Under appropriate circumstances a bolt **224** may pass through a portion of the outlet **202**, or the outlet **202** may provide access to the attaching bolt **224**.

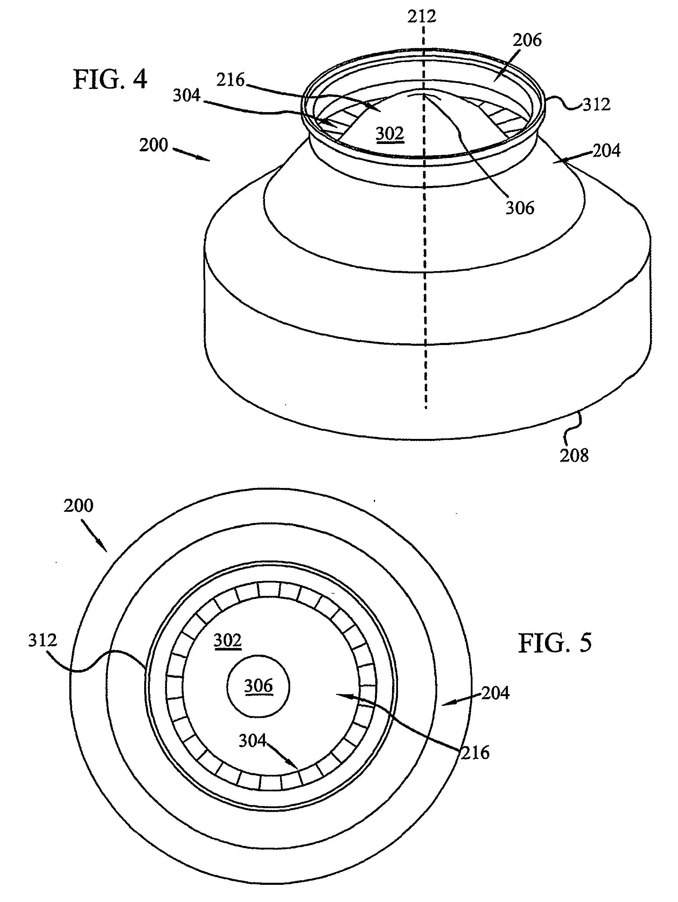

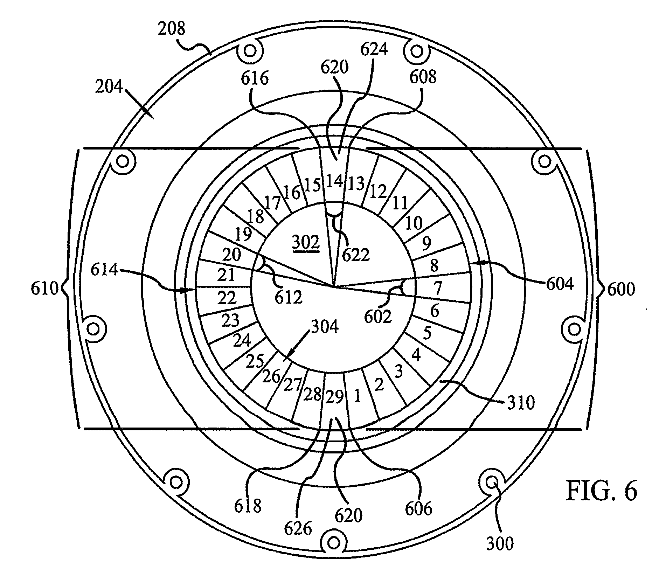

The advantages of the unitary inlet structure **200** may be further appreciated with respect to the views provided in FIGS. 3 through 6. The perspective view of FIG. 4, along with the exterior view of FIG. 5 and interior view of FIG. 6 are provided to complement FIGS. 3A and 3B. As indicated in the cutaway depictions of FIGS. 3A and 3B, the housing **204** and stator **216** are advantageously formed as a unified whole. There are no threads, welds or other forms of attachment joining separately formed components as in the prior art. Indeed, the term "unitary" as used herein with respect to the unitary inlet structure **200** is understood and appreciated to define the structure as an undivided whole, and not one assembled from a collection of separately manufactured parts. As is described in greater detail below, the unitary inlet structure **200** is preferably manufactured from a titanium alloy.

In at least one embodiment, the stator **216** is characterized by a central circular body **302** with a plurality of angularly spaced circumferentially mounted blades, commonly referred to as stator fins **304**, stator blades or stator veins. As shown, the stator fins **304** may exist at about the midpoint between the air inlet **206** and the mounting surface **208**. In at least one embodiment the stator fins **304** are substantially identical.

The central body **302** may be described as somewhat parabolic in shape such that the center-point **306** is extended towards the air inlet **206**. More specifically, the central body **302** serves to assist in defining the flow path **210**, directing the supplied compressed air into the stator fins **304**. As shown in FIG 3A, as the surface of the central body **302** expands from the center-point **306** to the stator fins **304**, the defined passage **308** (the first part of flow path **202** shown in FIG. 2) narrows. This narrowing of the passage **308** serves to further compress and increase the air velocity as it is directed into the stator fins **304**.

To assist and insure proper flow of the directed air through the turbine blades **115**, the stator **216** may additionally include an outer ring **310**. When the unitary inlet structure **200** is mounted to the main housing **105**, the outer ring **310** may encompass at least a portion of the distal edges **226** the turbine blades **115** (see FIG. 2). Improper placement of the stator **216** relative to the turbine blades **115** may result in inappropriate air flow between the stator and the turbine and correspondingly lower the turbine starter **100** performance.

As the prior art assembly requires the stator **121** and outer shell **123** to be joined, such as by mated threading **125**, substantially exact placement of the stator **121** relative to the turbine blades **115** may not be consistently achieved. Tooling issues in the threading process may result in the stator **121** being either too close or too removed from the turbine blades **115**. An advantageous result of the unitary construction herein disclosed, is the substantially exact and consistent placement of the stator **216** relative to the turbine blades **115** when the unitary inlet structure **200** is attached to the main housing **105**.

To further enhance the velocity of the air as it drives through the turbine blades **115**, the stator fins **304** may have a cross-sectional shape of an air-foil **320** (see FIG. 3B). In general, the leading edge **322** of each stator fin exists in a common plain **326** transverse to the longitudinal centerline **212**. In a similar fashion, the trailing edge **324** of each stator fin exists in a common plain parallel to the plain defined by the plurality of leading edges **322**.

During operation of the air turbine starter, compressed air is supplied to the air inlet **206**, generally with the use of a flexible hose. To assist with the attachment of a hose, the unitary inlet structure **200** may include a flanged skirt **312** or other suitable structure to which a supply hose may readily be attached. The non-moving, rigidly mounted stator fins **304** serve in part to shelter the turbine assembly **107** from the direct brunt of the potentially non-uniform thrust force provided by the compressed air as it exits the supply hose and enters the air inlet **206**. The compressed air is directed by the passage **308** to arrive at the stator fins **304** with an alignment of flow that is substantially parallel to the longitudinal centerline **212**. Relative to this flow of oncoming air, the stator fins **304** are oriented with an angle of attack to uniformly align the flow of air for delivery into the turbine blades **115**. It is understood and appreciated that an angle of attack of an, such as one of the turbine blades **115**, is the angle at which the relative wind meets the airfoil. In at least one embodiment, the angle of attack is about 36.738 degrees. Further, in at least one embodiment the angular spacing of the stator fins **304** may be symmetric.

As noted above, prior art turbine starters have been found to experience occasional mouse bites to the turbine blades **115**. According to at least one embodiment of the present invention, the harmonics created by the air passing from the stator **216** through the turbine blades **115** which create the environment for mouse bites to occur may be substantially prevented. Specifically, according to at least one embodiment of the present invention, the angular spacing of the stator fins **304** is asymmetric. The asymmetric spacing of the stator fins **304** induces different portions of the stator **216** to deliver air to the turbine blades **115** slightly differently. As an engineer might generalize to a layperson, the turbine wheel is fooled during it's rotations - at one moment in the revolution the blades **115** receive air from a stator **216** appearing to have one number of stator fins **304**, and at the next moment appearing to have a different number of stator fins **340**. Such differences in air delivery are sufficient to disrupt and/or otherwise prevent the formation of potentially harmful harmonic frequencies in the turbine blades **115**.

The asymmetric angular spacing of the stator fins **304** may be more fully appreciated with reference to FIG. 6. The stator fins **304** may be subdivided into at least three groups. The first group **600** of stator fins **304** may be characterized by substantially equal angular spacing **602** for about the total number of overall stator fins plus at least one, the spaced arrangement forming a first arc **604** having a first end **606** and a second end **608**.

The second group **610** of stator fins **304** may be characterize by substantially equal angular spacing **612** for about the total number of overall stator fins minus at least one, the spaced arrangement forming a second arc **614** having a first end **616** and a second end **618**. A transition group **620** characterized by an even number of stator fins **304** substantially equal in angular spacing **622** for about the total number of stator fins **304**. The transition group **620** serves to transition the spacing from the first group **600** to the second group **610**, and from the second group **610** back to the first group **600**. More specifically, in at least one embodiment one half of the transition group **620**, for example stator fin **624**, is placed between the second end **608** of the first arc **604** and the first end b of the second arc **614**. In similar fashion, the second half of the transition group **620**, for example stator fin **626**, is placed between the second end **618** of the second arc **614** and the first end **606** of the first arc **604**. This arrangement of the first group **600**, second group **610** and transition group **620** substantially forms a circle.

As shown, in at least one embodiment the stator **216** comprises 29 stator fins **304**. In addition, in at least one embodiment the number of stator fins **304** in each of the above described groups may be as follows; the first group **600** consisting of 14; the second group consisting of 13; and the transition group consisting of 2. The angular spacing **602** of the fins of the first group **600** (stator fins **304** 1 through 14) is about 12.0000 degrees. The angular spacing **612** of the fins of the second group **608** (stator fins **304** 16 through 28) is about 12.8571 degrees. The angular spacing **622** of the transition group **622** (stator fins **304** 15 and 29) is about 12.4286 degrees.

As used herein, the term angular spacing is to be understood and appreciated to imply angular increments about the circumference of a circle. For example, placing 12 points at the angular spacing of 30 degrees along the circumference of a circle will provide the hour marks as are commonly seen on traditional non-digital clocks. Moreover, as measured from a consistent point, one stator fin to the next (leading edge **322**, trailing edge **324** or other reference point), if stator fin A' is to be angularly spaced 12.0000 degrees from stator fin A, the leading edge **322** of stator fin A' will be 12.0000 degrees from the leading edge **322** of stator fin A.

In addition to the precise placement of the stator **216** relative to the turbine blades **115** as discussed above, the unitary inlet structure **200** provides numerous additional benefits. Manufacturing costs and time may be reduced by eliminating the additional tooling required to thread the stator and housing components so that they may be joined. In addition, the use of a locking pin or other setting device that may inadvertently come loose and cause internal damage to the air turbine starter **100** is eliminated. Further, inventory, tracking, and purchase order issues are simplified as a natural result from the reduction in component pieces.

The preferred embodiments of the unitary inlet structure **200** are preferably achieved with a titanium unitary inlet structure **200**. More specifically, fabrication of the unitary inlet structure **200** may by achieved with the use of a titanium alloy, such as a general purpose titanium alloy as is traditionally used in the aircraft industry for parts requiring a good strength-to-weight ratio and corrosion resistance.

In at least one embodiment, the titanium alloy commonly known and identified as Ti6A14V may be used. The unitary inlet structure **200** as fabricated from the titanium alloy may be significantly lighter than prior art stator and inlet assemblies wherein the housing is fabricated in titanium alloy, but the stator is fabricated from a heavier alloy such as a common inconel alloy. In at least one embodiment the unitary inlet structure **200** may be about 0.5 pounds (~0.23 kg) lighter than conventional prior art inlet and stator assemblies, an achievement that may translate to a savings of about $500 per takeoff to the aircraft operator.

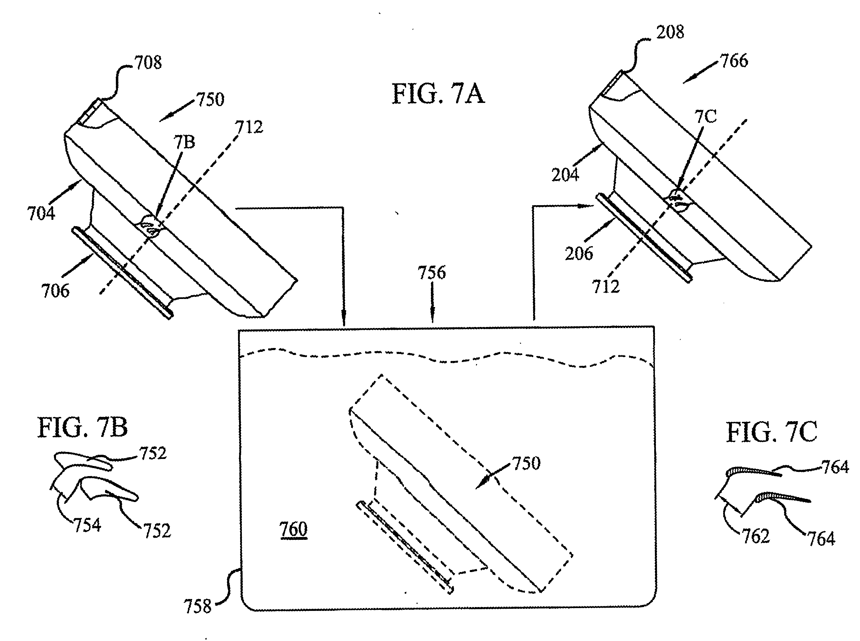

Having described the individual components of the unitary inlet structure **200**, a preferred method of fabricating a titanium unitary inlet structure **200** will now be described as is illustrated in FIG. 7. It will be appreciated that the described method need not be performed in the order in which it is herein described, but that this description is merely exemplary of one preferred method of fabricating a titanium unitary inlet structure **200** in accordance with the present invention.

In at least one embodiment, fabrication involving casting may be used. With the use of casting there is no requirement that the stator **216**, and more specifically the stator fins **304** be separately manufactured, arranged and joined by an appropriate process. Casting advantageously permits the outer housing **204** and internal stator **216** to be formed of substantially the same alloy and at substantially the same time.

As noted above, prior attempts to achieve a titanium unitary inlet structure **200** have been unsuccessful. To surmount this obstacle, in at least one embodiment an oversized annular housing **704** having a longitudinal centerline **712** is cast. The oversized housing defines an air inlet **706**, a mounting surface **708** and a flow path therebetween. Inside the housing **704** is integrally cast an oversized stator between the air inlet **706** and mounting surface **708**, substantially transverse to and concentric with the longitudinal centerline **712**.

The internal cast stator is further characterized by a central circular body with a plurality of angularly spaced circumferentially mounted oversized stator fins **752** connecting the stator to the housing **704**. In at least one embodiment the titanium alloy used in the casting is commonly known and identified as Ti6A14V. In at least one embodiment the angular spacing of the stator fins may be symmetrical. In at least one alternative embodiment the angular spacing of the stator fins may be asymmetrical, as described above.

It is understood and appreciated that as used herein, the term oversized refers to casting the unitary inlet structure **750** with excess thicknesses relative to the design specifications. It is to be further understood and appreciated that substantially all of the components are uniformly oversized. For example, if the cast stator fins **752** are oversized by about 2 millimeters in thickness, then so too is the cast housing **704** oversized by about 2 millimeters in thickness. As shown in FIG. 7A the clearance **754** between the freshly cast stator fins **752** may be small, and below design specifications.

To remove the additional alloy from the oversized surfaces, the cast oversized unitary inlet structure **750** are placed in a chemical bath **756**. More specifically the oversized unitary inlet structure **750** may be suspended in a milling tank **758** containing an appropriate chemical milling solution **760** for the titanium alloy used in the casting. Under appropriate circumstances it may be desired to preclean the oversized unitary inlet structure **750** to remove foreign materials such as oil, etc. Generally speaking, agitation of the milling solution **760** may occur during the chemical milling process to improve exposure of the surfaces to the milling solution **760** as well as to maintain a balanced concentration of the milling solution **760** throughout the tank **758**.

The duration of the chemical milling process may be determined by calculating the rate of alloy removal for the chemical milling agent employed. Due to the precise clearance between the stator fins set forth in the design specifications, it may be desirable to calculate a first duration sufficient to remove substantially about 50 to 90 percent of the oversizing alloy. Upon removal from the chemical bath **756**, the technician may measure the clearance **762** between the chemically milled stator fins **764** of the chemically milled unitary inlet structure **766** and compare the measured clearances to the design specifications providing one or more predetermined values.

From the measured clearance, the rate of removal may be recalculated and used to determine the duration for a repeat of the chemical milling process, if necessary, sufficient to provide clearance between the stator fins within design specifications. In at least one embodiment, the process of chemical milling may be repeated three times, the first removing substantially about 50% of the oversizing alloy, the second removing about 90% of the remaining oversizing alloy, and the third removing substantially all of the remaining oversizing alloy to provide clearance 764 within design specifications. Moreover, the stator fins are chemically milled until at least the measured clearance between the chemically milled stator fins is substantially equal to one or more of the predetermined values set forth in the design specifications.

It is understood and appreciated that the components of the chemically milled unitary inlet structure **766** are substantially identical to the above identified and discussed components of the unitary inlet structure **200**. Under appropriate circumstances, additional tooling may be performed upon chemically milled unitary inlet structure **766**, such as to further define the flanged skirt **312** and / or threaded sockets **300**.

Chemical milling of the cast titanium unitary inlet structure permits the fabrication technician to achieve the required airfoil contours of the stator fins without requiring separate manufacture and installation. Reducing manufacturing time and costs, such single piece casting also aids in producing substantially identical titanium components resulting in more consistent and predictable turbine starter **100** performance. Maintenance upon the titanium unitary inlet structure is also substantially reduced as it is generally not possible for the components to separate. Reductions in manufacturing costs may also permit a damaged stator and inlet to simply be recycled rather than re-manufactured.

It is intended that the invention not be limited to the particular embodiments disclosed as the best mode contemplated for carrying out this invention, but that the invention will include all embodiments falling within the scope of the appended claims.

## Claims

1. An air turbine starter (100) comprising:
a main housing (105);
a turbine assembly (107) partially disposed within the main housing (105), the turbine assembly (107) including a turbine wheel (113) having a plurality of blades (115) circumferentially mounted thereon; and
a unitary inlet structure (200) coupled to the main housing (105) and substantially enclosing at least a portion of the turbine wheel (113), the unitary inlet (200) structure including:
an annular housing section (204) having at least a longitudinal centerline (212), an inlet (206) through which the longitudinal centerline (212) passes, an inner surface (228), and a mounting surface (208), the mounting surface (208) coupled to the main housing (105); and
a stator section (216) integrally formed as part of the annular housing section (204), the stator section (216) disposed at least partially within the housing section (204) and having an outer surface (230),
wherein at least a portion of the housing section inner surface (228) and at least a portion of the stator section outer surface (230) form a flow path (210) that extends substantially parallel to the longitudinal centerline (212) and fluidly couples the housing section air inlet (206) to the turbine blades (115).

2. The air turbine starter (100) of claim 1, wherein the unitary inlet structure (200) is manufactured from a titanium alloy.

3. The air turbine starter (100) of claim 1, wherein the stator is **characterized by** a central circular body (302) with a plurality of angularly spaced circumferentially mounted stator fins (304).

4. The air turbine starter (100) of claim 1, wherein the stator is **characterized by** a central circular body (302) with a plurality of asymmetrically angularly spaced circumferentially mounted stator fins (304).

5. The air turbine starter (100) of claim 4, wherein the stator fins (304) are subdivided into at least three groups;
a first group (600) substantially equally angularly spaced for about the total number of stator fins (304) plus at least one, the spaced arrangement forming a first arc (604) having a first and second end (606, 608);
a second group (610) substantially equally angularly spaced for about the total number of stator fins (304) minus at least one, the spaced arrangement forming a second arc (614) having a first and second end (616, 614); and
a transition group (620) **characterized by** an even number of stator fins (304) substantially equally angularly spaced for about the total number of stator fins (304);
wherein one half of the transition group is placed between the second end (608) of the first arc (604) and the first end (616) of the second arc (614), and the second half of the transition group (620) is placed between the second end (618) of the second arc (614) and the first end (606) of the first arc (604), thereby joining the first and second arcs (604, 614) to substantially form a circle.

6. An air turbine starter unitary inlet structure (200) comprising:
an annular housing (204) having a longitudinal centerline (212), an air inlet (206) through which the longitudinal centerline (212) passes, an inner surface (228), and a mounting surface (208); and
an annular air director (216) integrally formed as part of the annular housing (204), the air director (216) disposed at least partially within the annular housing (204) and having an outer surface (230),
wherein at least a portion of the annular housing inner surface (228) and at least a portion of the air director outer surface (23 0) form a flow path that extends substantially parallel to the longitudinal centerline (212).

7. The unitary inlet structure of claim 6, wherein the annular air director (216) is a stator (216) **characterized by** a central circular body (302) with a plurality of angularly spaced circumferentially mounted stator fins (304).

8. The unitary inlet-structure (200) of claim 7, wherein the spacing of the stator fins (304) is asymmetric.

9. The unitary inlet structure of claim 6, manufactured from a titanium alloy.

## Patentansprüche

1. Luftturbinenstarter (100), der aufweist:
ein Hauptgehäuse (105);
eine Turbinenbaugruppe (107), die zum Teil innerhalb des Hauptgehäuses (105) angeordnet ist, wobei die Turbinenbaugruppe (107) ein Turbinenrad (113) mit mehreren am Umfang daran angebrachten Schaufeln (115) aufweist; und
eine einstückige, Einlasskonstruktion (200), die mit dem Hauptgehäuse (105) verbunden ist und mindestens einen Abschnitt des Turbinenrades (113) im Wesentlichen umschließt, wobei die einstückige Einlasskonstruktion (200) aufweist:
einen ringförmigen Gehäuseabschnitt (204) mit mindestens einer Längsmittellinie (212), einem Einlass (206), durch welchen die Längsmittellinie (212) verläuft, einer inneren Oberfläche (228) und einer Montageoberfläche (208), wobei die Montageoberfläche (208) mit dem Hauptgehäuse (105) verbunden ist; und
einen Statorabschnitt (216), der einstückig als Teil des ringförmigen Gehäuseabschnitts (204) ausgebildet ist, wobei der Statorabschnitt (216) mindestens zum Teil innerhalb des Gehäuseabschnitts (204) angeordnet ist und eine äußere Oberfläche (230) aufweist,
wobei mindestens ein Abschnitt der inneren Oberfläche (228) des Gehäuseabschnitts und mindestens ein Abschnitt der äußeren Oberfläche (230) des Statorabschnitts einen Durchflussweg (210) bilden, der sich im Wesentlichen parallel zu der Längsmittellinie (212) erstreckt und den Lufteinlass (206) des Gehäuseabschnitts in Fließverbindung mit den Turbinenschaufeln (115) bringt.

2. Luftturbinenstarter (100) nach Anspruch 1, wobei die einstückige Einlasskonstruktion (200) aus einer Titanlegierung hergestellt ist.

3. Luftturbinenstarter (100) nach Anspruch 1, wobei der Stator durch einen zentralen kreisförmigen Körper (302) mit mehreren voneinander winkelig beabstandeten, am Umfang angebrachten Statorschaufeln (304) **gekennzeichnet** ist.

4. Luftturbinenstarter (100) nach Anspruch 1, wobei der Stator durch einen zentralen kreisförmigen Körper (302) mit mehreren voneinander asymmetrisch winkelig beabstandeten, am Umfang angebrachten Statorschaufeln (304) **gekennzeichnet** ist.

5. Luftturbinenstarter (100) nach Anspruch 4, wobei die Statorschaufeln (304) in mindestens drei Gruppen unterteilt sind;
eine erste Gruppe (600), die im Wesentlichen über etwa die Gesamtanzahl von Statorschaufeln (304) zuzüglich mindestens einer gleich voneinander winkelig beabstandet sind, wobei die beabstandete Anordnung einen ersten Bogen (604) bildet, der ein erstes und ein zweites Ende (606, 608) aufweist;
eine zweite Gruppe (610), die im Wesentlichen über etwa die Gesamtanzahl von Statorschaufeln (304) abzüglich mindestens einer gleich voneinander winkelig beabstandet sind, wobei die beabstandete Anordnung einen zweiten Bogen (614) bildet, der ein erstes und ein zweites Ende (616, 618) aufweist;
eine Übergangsgruppe (620), die durch eine gerade Anzahl von Statorschaufeln (304) **gekennzeichnet** ist, die im Wesentlichen gleich über etwa die Gesamtanzahl von Statorschaufeln (304) voneinander winkelig beabstandet sind;
wobei eine Hälfte der Übergangsgruppe zwischen dem zweiten Ende (608) des ersten Bogens (604) und dem ersten Ende (616) des zweiten Bogens (614) und die zweite Hälfte der Übergangsgruppe (620) zwischen dem zweiten Ende (618) des zweiten Bogens (614) und dem ersten Ende (606) des ersten Bogens (604) angeordnet ist, wodurch der erste und der zweite Bogen (604, 614) zusammengefügt werden, um im Wesentlichen einen Kreis zu bilden.

6. Einstückige Einlasskonstruktion (200) eines Luftturbinenstarters, die aufweist:
ein ringförmiges Gehäuse (204) mit einer Längsmittellinie (212), einem Lufteinlass (206), durch welchen die Längsmittellinie (212) verläuft, einer inneren Oberfläche (228) und einer Montageoberfläche (208); und
einen ringförmigen Luftleiter (216), der einstückig als Teil des ringförmigen Gehäuses (204) ausgebildet ist, wobei der Luftleiter (216) mindestens zum Teil innerhalb des ringförmigen Gehäuses (204) angeordnet ist und eine äußere Oberfläche (230) aufweist,
wobei mindestens ein Abschnitt der inneren Oberfläche (228) des ringförmigen Gehäuses und mindestens ein Abschnitt der äußeren Oberfläche (230) des Luftleiters einen Durchflussweg bilden, der sich im Wesentlichen parallel zu der Längsmittellinie (212) erstreckt.

7. Einstückige Einlasskonstruktion nach Anspruch 6, wobei der ringförmige Luftleiter (216) ein Stator (216) ist, der durch einen zentralen kreisförmigen Körper (302) mit mehreren voneinander winkelig beabstandeten, am Umfang angebrachten Statorschaufeln (304) **gekennzeichnet** ist.

8. Einstückige Einlasskonstruktion (200) nach Anspruch 7, wobei die Beabstandung der Statorschaufeln (304) asymmetrisch ist.

9. Einstückige Einlasskonstruktion nach Anspruch 6, die aus einer Titanlegierung hergestellt ist.

## Revendications

1. Lanceur de turbine à air (100), comprenant:
un boîtier principal (105);
un ensemble de turbine (107) disposé partiellement à l'intérieur du boîtier principal (105), l'ensemble de turbine (107) comprenant une roue de turbine (113) comportant une pluralité d'aubes (115) montées circonférentiellement sur celle-ci; et
une structure d'admission unitaire (200) couplée au boîtier principal (105) et contenant substantiellement au moins une partie de la roue de turbine (113), la structure d'admission unitaire (200) comprenant:
une section de boîtier annulaire (204) présentant au moins un axe médian longitudinal (212), une admission (206) à travers laquelle l'axe médian longitudinal (212) passe, une surface intérieure (228) et une surface de montage (208), la surface de montage (208) étant couplée au boîtier principal (105); et
une section de stator (216) formée intégralement comme une partie de la section de boîtier annulaire (204), la section de stator (216) étant disposée au moins partiellement à l'intérieur de la section de boîtier (204) et présentant une surface extérieure (230),
dans lequel au moins une partie de la surface intérieure (228) de la section de boîtier et au moins une partie de la surface extérieure (230) de la section de stator forment un chemin d'écoulement (210) qui s'étend essentiellement parallèlement à l'axe médian longitudinal (212) et qui couple fluidiquement l'admission d'air (206) de la section de boîtier aux aubes (115) de la turbine.

2. Lanceur de turbine à air (100) selon la revendication 1, dans lequel la structure d'admission unitaire (200) est fabriquée à partir d'un alliage de titane.

3. Lanceur de turbine à air (100) selon la revendication 1, dans lequel le stator est **caractérisé par** un corps circulaire central (302) comportant une pluralité d'ailettes de stator montées circonférentiellement et angulairement espacées (304).

4. Lanceur de turbine à air (100) selon la revendication 1, dans lequel le stator est **caractérisé par** un corps circulaire central (302) comportant une pluralité d'ailettes de stator montées circonférentiellement et asymétriquement espacées (304).

5. Lanceur de turbine à air (100) selon la revendication 4, dans lequel les ailettes de stator (304) sont subdivisées en au moins trois groupes:
un premier groupe (600) d'ailettes angulairement espacées de façon sensiblement uniforme pour environ le nombre total d'ailettes de stator (304) plus au moins une ailette, l'agencement espacé formant un premier arc (604) présentant une première et une deuxième extrémités (606, 608);
un deuxième groupe (610) d'ailettes angulairement espacées de façon sensiblement uniforme pour environ le nombre total d'ailettes de stator (304) moins au moins une ailette, l'agencement espacé formant un deuxième arc (614) présentant une première et une deuxième extrémités (616, 618); et
un groupe de transition (620) **caractérisé par** un nombre pair d'ailettes de stator (304) angulairement espacées de façon sensiblement uniforme pour environ le nombre total d'ailettes de stator (304);
dans lequel une moitié du groupe de transition est placée entre la deuxième extrémité (608) du premier arc (604) et la première extrémité (616) du deuxième arc (614), et la deuxième moitié du groupe de transition (620) est placée entre la deuxième extrémité (618) du deuxième arc (614) et la première extrémité (606) du premier arc (604), joignant ainsi les premier et deuxième arcs (604, 614) pour former substantiellement un cercle.

6. Structure d'admission unitaire (200) de lanceur de turbine à air, comprenant:
un boîtier annulaire (204) présentant un axe médian longitudinal (212), une admission d'air (206) à travers laquelle l'axe médian longitudinal (212) passe, une surface intérieure (228) et une surface de montage (208); et
un dispositif de direction d'air annulaire (216) formé intégralement comme une partie du boîtier annulaire (204), le dispositif de direction d'air (216) étant disposé au moins partiellement à l'intérieur du boîtier annulaire (204) et présentant une surface extérieure (230),
dans laquelle au moins une partie de la surface intérieure (228) du boîtier annulaire et au moins une partie de la surface extérieure (230) du dispositif de direction d'air forment un chemin d'écoulement qui s'étend essentiellement parallèlement à l'axe médian longitudinal (212).

7. Structure d'admission unitaire selon la revendication 6, dans laquelle le dispositif de direction d'air annulaire (216) est un stator (216) **caractérisé par** un corps circulaire central (302) comportant une pluralité d'ailettes de stator montées circonférentiellement et angulairement espacées (304).

8. Structure d'admission unitaire (200) selon la revendication 7, dans laquelle l'espacement entre les ailettes de stator (304) est asymétrique.

9. Structure d'admission unitaire selon la revendication 6, fabriquée à partir d'un alliage de titane.
